# EUROPÄISCHE PATENTSCHRIFT

(11) **EP 2 756 589 B1**
(45) Veröffentlichungstag und Bekanntmachung des Hinweises auf die Patenterteilung: **14.08.2019**
(21) Anmeldenummer: 11788387.6
(22) Anmeldetag: 24.10.2011
(51) Int. Cl.: H02M 7/49

(54) **KONVERTER FÜR HOCHSPANNUNGSGLEICHSTROMÜBERTRAGUNG**
CONVERTER FOR HVDC TRANSMISSION SYSTEMS
CONVERTISSEUR POUR LE TRANSPORT DE COURANT CONTINU À HAUTE TENSION

(43) Veröffentlichungstag der Anmeldung: 23.07.2014
(73) Patentinhaber: Siemens Aktiengesellschaft, 80333 München (DE)
(72) Erfinder: PEREIRA, Marcos, 91056 Erlangen (DE)
(86) Internationale Anmeldenummer: PCT/EP2011/068548
(87) Internationale Veröffentlichungsnummer: WO 2013/060354

(56) Entgegenhaltungen:
- WO-A1-00/70737
- WO-A1-2008/110129
- WO-A1-2011/124260
- DE-A1-102009 057 288
- US-A1- 2007 268 482
- MODEER T ET AL: "Loss comparison of different sub-module implementations for modular multilevel converters in HVDC applications", 2011 14TH EUROPEAN CONFERENCE ON POWER ELECTRONICS AND APPLICATIONS (EPE 2011) IEEE PISCATAWAY, NJ, USA, 30. August 2011 (2011-08-30), - 1. September 2011 (2011-09-01), Seite 7 pp., XP002683675, ISBN: 978-1-61284-167-0
- MERLIN M M C ET AL: "A New Hybrid Multi-Level Voltage-Source Converter with DC Fault Blocking Capability", INTERNATIONAL CONFERENCE ON AC AND DC POWER TRANSMISSION.(ACDC 2010), XX, XX, Nr. 9TH, 19. Oktober 2010 (2010-10-19), Seiten 1-5, XP002675791, ISBN: 978-1-84919-308-5

## Beschreibung

Die Erfindung betrifft ein Konvertermodul für einen Multilevel-Konverter zur Hochspannungsgleichstromübertragung, ein Verfahren zur Ansteuerung des Konvertermoduls sowie einen Multilevel-Konverter zur Hochspannungsgleichstromübertragung.

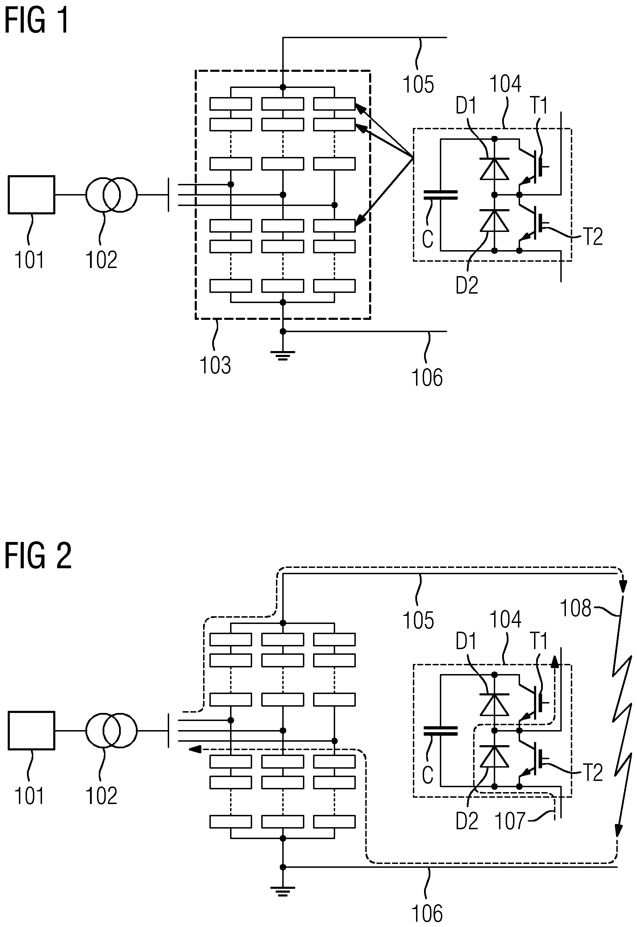

Für die Hochspannungsgleichstromübertragung (HGÜ) werden sogenannte modulare Multilevel-Konverter (MMC für "Modular Multilevel Converter") eingesetzt, deren Grundbaustein eine sogenannte Halbbrücke aus IGBT und Dioden ist. Dieser Grundbaustein wird auch als Konvertermodul oder Modul bezeichnet. Es ist bekannt, eine Vielzahl solcher Module in Reihe zu schalten, um eine Hochspannungsfestigkeit zu erreichen. Fig.1 zeigt beispielhaft eine solche Anordnung, wobei ein Wechselstromnetz 101 über einen Transformator 102 mit einem MMC 103 und somit mit einem Gleichspannungsnetz (mit Anschlüssen 105 und 106) verbunden ist. Der MMC 103 umfasst eine Vielzahl von Konvertermodulen 104, wobei beispielhaft der Aufbau eines Konvertermoduls 104 gezeigt ist: Ein elektronischer Schalter T1 ist mit einem zweiten elektronischen Schalter T2 in Reihe geschaltet, wobei jeweils entgegen der Durchlassrichtung des elektronischen Schalters T1, T2 eine Diode D1, D2 angeordnet ist. Parallel zu der Reihenschaltung aus den elektronischen Schaltern T1 und T2 ist ein Kondensator C angeordnet. Bei den elektronischen Schaltern kann es sich um Transistoren, z.B. Bipolartransistoren, insbesondere um IGBTs handeln. Das Konvertermodul 104 stellt einen Zweipol dar, der einerseits mit einem Mittenabgriff zwischen den Schaltern T1, T2 und andererseits mit dem Schalter T2 (dem Emitter des Schalters T2, wenn dieser als Transistor ausgeführt ist) verbunden ist.

Ein Problem der in Fig.1 dargestellten Anordnung besteht darin, dass der MMC 103 den Strom nur in einer Richtung sperren kann. Fig.2 zeigt die Schaltung von Fig.1, wobei zwischen den Anschlüssen 105, 106 des Gleichspannungsnetzes ein Kurzschluss 108 besteht. Ein solcher Kurzschluss 108 bewirkt, dass der Strom in einer Richtung 107 durch die Diode D2 der Konvertermodule 104 ungehindert fließen kann und somit der Kurzschluss über den MMC 103 auch an dem Wechselstromnetz 101 auftritt, und zwar immer dann, wenn die Wechselspannung an den jeweiligen Phasen des Wechselstromnetzes 101 die Polarität aufweist, die die Diode D2 in den leitenden Zustand bringt. Dies stellt eine gefährliche Situation für die Anlage dar.

Aus dem Artikel "Loss Comparison of Different Sub-Module Implementations for Modular Multilevel Converters in HVDC Applications" von T. Modeer et al, 14th European conference on power electronics and applications (EPE 2011), 30.08.2011-01.09.2011, ist bekannt, dass die Submodule von modularen Multilevelkonvertern als Halbbrücken-Submodule oder als Vollbrücken-Submodule ausgeführt sein können.

Die Aufgabe der Erfindung besteht darin, die vorstehend genannten Nachteile zu vermeiden und insbesondere eine effiziente Möglichkeit zum Schutz vor einem Kurzschluss zu ermöglichen.

Diese Aufgabe wird gemäß den Merkmalen der unabhängigen Ansprüche gelöst. Bevorzugte Ausführungsformen sind insbesondere den abhängigen Ansprüchen entnehmbar.

Zur Lösung der Aufgabe wird ein Konvertermodul für einen Multilevel-Konverter zur Hochspannungsgleichstromübertragung vorgeschlagen,
- mit einer ersten Schalteinheit und mit einer zweiten Schalteinheit, wobei die erste Schalteinheit und die zweite Schalteinheit in Reihe geschaltet sind,
- mit einem Kondensator der parallel zu der in Reihe geschalteten ersten Schalteinheit und zweiten Schalteinheit angeordnet ist,
- wobei die zweite Schalteinheit als ein Zweirichtungsschalter ausgeführt ist.

Bei dem Zweirichtungsschalter handelt es sich um einen steuerbaren Schalter, der es erlaubt, den Stromfluss des Konvertermoduls in beide Richtungen, d.h. Strom unterschiedlicher Polaritäten, zu beeinflussen, d.h. zumindest teilweise zu sperren.

Hierbei sei erwähnt, dass die Schalteinheiten mittels einer Steuereinheit ansteuerbar sind und somit einzeln oder in Gruppen aktiviert (leitend geschaltet) oder deaktiviert (sperrend geschaltet) werden können.

Der hier vorgeschlagene Ansatz erlaubt eine effiziente Optimierung von Konvertermodulen, wobei beispielhaft nur ein einzelner aus einem schaltbaren Halbleiter und einer Diode bestehender Brückenschalter in dem Konvertermodul durch einen Zweirichtungsschalter ersetzt wird. Die unsymmetrische Realisierung erlaubt hierbei eine deutliche Effizienzsteigerung.

Eine Weiterbildung ist es, dass
- das Konvertermodul einen ersten und einen zweiten Anschluss zur Verbindung in dem Multilevel-Konverter aufweist,
- wobei der erste Anschluss mit einem Mittenabgriff zwischen der ersten Schalteinheit und dem Zweirichtungsschalter verbunden ist und
- wobei der zweite Anschluss mit dem anderen Pol des Zweirichtungsschalters verbunden ist.

Eine andere Weiterbildung ist es, dass die erste Schalteinheit einen Transistor oder einen IGBT aufweist mit einer antiparallel angeordneten Diode.

Als Schaltelemente können auch IGC-Thyristoren (englisch: integrated gate-commutated thyristor, IGCT) eingesetzt werden.

Hierbei sei angemerkt, dass die antiparallel angeordnete Diode eine Diode ist, die entgegen der Durchflussrichtung des Transistors bzw. IGBT geschaltet ist, d.h. bei einem npn-Transistor verläuft die Durchflussrichtung vom Kollektor über den Emitter, die antiparallel angeordnete Diode ist somit parallel zu Kollektor und Emitter des Transistors angeordnet, wobei die Kathode in Richtung des Kollektors zeigt.

Insbesondere ist es eine Weiterbildung, dass der Zweirichtungsschalter einen bidirektionalen steuerbaren Schalter aufweist.

Der bidirektionale steuerbare Schalter ist hierbei so ausgeführt, dass durch die Steuereinheit jede Polarität des Stroms durch den Zweirichtungsschalter getrennt voneinander (teilweise) gesperrt bzw. beeinflusst werden kann.

Auch ist es eine Weiterbildung, dass der bidirektionale Schalter
- einen ersten elektronischen Schalter aufweist, der in Reihe mit einer ersten Diode geschaltet ist,
- wobei parallel zu dieser Reihenschaltung aus erstem elektronischen Schalter und erster Diode ein zweiter elektronischer Schalter angeordnet ist,
- wobei der erste elektronische Schalter und der zweite elektronische Schalter je eine Diodenstrecke aufweisen, wobei die Diodenstrecken der elektronischen Schalter zueinander entgegengesetzt angeordnet sind,
- wobei die erste Diode entsprechend der Diodenstrecke des ersten elektronischen Schalters angeordnet ist.

Die Diodenstrecke ist beispielsweise bestimmt durch die Emitterdiode eines Bipolartransistors.

Der erste elektronische Schalter wird beispielsweise leitend angesteuert. Soll der Konverter z.B. wegen eines Kurschlusses gesperrt werden, werden der erste elektronische Schalter, der zweite elektronische Schalter sowie die erste Schalteinheit in den sperrenden Zustand versetzt. Somit wird durch den ersten elektronischen Schalter verhindert, dass ein Strom durch die mit diesem in Reihe geschaltete Diode fließen kann.

Ferner ist es eine Weiterbildung, dass zu dem zweiten elektronischen Schalter eine zweite Diode in Reihe geschaltet ist, wobei die zweite Diode entsprechend der Diodenstrecke des zweiten elektronischen Schalters angeordnet ist.

Eine alternative Ausgestaltung ist es, dass der bidirektionale Schalter
- einen ersten elektronischen Schalter mit einer antiparallel angeordneten ersten Diode aufweist,
- einen zweiten elektronischen Schalter mit einer antiparallel angeordneten zweiten Diode aufweist,
- wobei der erste elektronische Schalter und der zweite elektronische Schalter je eine Diodenstrecke aufweisen, wobei die Diodenstrecken der elektronischen Schalter zueinander entgegengesetzt angeordnet sind,
- wobei die Parallelschaltung aus erstem elektronischen Schalter und erster Diode mit der Parallelschaltung aus zweitem elektronischen Schalter und zweiter Diode in Reihe geschaltet sind.

Hierbei sei angemerkt, dass der elektronische Schalter als ein steuerbarer elektronischer Schalter, z.B. ein Transistor, Bipolartransistor, IGBT, Mosfet, o.ä. realisiert sein kann. Auch Kombinationen unterschiedlicher elektronischer Schalter sind einsetzbar.

Eine nächste Weiterbildung besteht darin, dass parallel zu dem ersten elektronischen Schalter ein Überspannungsschutz angeordnet ist.

Eine Ausgestaltung ist es, dass parallel zu dem zweiten elektronischen Schalter ein Überspannungsschutz angeordnet ist.

Eine alternative Ausführungsform besteht darin, dass parallel zu dem Zweirichtungsschalter ein Überspannungsschutz angeordnet ist.

Eine nächste Ausgestaltung ist es, dass parallel zu dem Konvertermodul ein Überspannungsschutz angeordnet ist.

Auch ist es eine Ausgestaltung, dass der Überspannungsschutz mindestens einen Widerstand aufweist.

Eine Weiterbildung besteht darin, dass
- der Überspannungsschutz einen ersten Widerstand, einen zweiten Widerstand und einen Snubber-Kondensator aufweist,
- wobei der erste Widerstand mit dem Snubber-Kondensator in Reihe geschaltet ist und
- wobei der zweite Widerstand zu der Reihenschaltung aus erstem Widerstand und Snubber-Kondensator parallel geschaltet ist.

Die vorstehend genannte Aufgabe wird auch gelöst durch ein Verfahren zur Ansteuerung des hier beschriebenen Konvertermoduls, bei dem in einem Fehlerfall die erste Schalteinheit und die zweite Schalteinheit sperrend angesteuert werden.

Bei dem Fehlerfall kann es sich z.B. um einen Kurzschluss handeln. Die Ansteuerung der Schalteinheiten bzw. elektronischen Schalter kann mittels einer (zentralen oder dezentralen) Steuereinheit erfolgen.

Ferner wird die oben genannte Aufgabe gelöst mittels eines Multilevel-Konverters zur Hochspannungsgleichstromübertragung mit einer Vielzahl von hierin beschriebenen Konvertermodulen,
- wobei mehrere Stränge von Konvertermodulen parallel geschaltet sind,
- wobei ein Strang mehrere in Reihe geschaltete Konvertermodule aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:
- Fig.1: eine beispielhafte Beschaltung eines Multilevel-Konverters mit einer Vielzahl von Konvertermodulen;
- Fig.2: basierend auf Fig.1 einen Kurschluss im Gleichspannungsnetz mit Auswirkung auf das Wechselstromnetz;
- Fig.3: eine schematische Darstellung eines Konvertermoduls mit einem Zweirichtungsschalter zur Vermeidung unerwünschter Rückkopplungen auf das Wechselstromnetz;
- Fig.4: eine beispielhafte Realisierung des in Fig.3 gezeigten Zweirichtungsschalters;
- Fig.5: eine alternative Realisierung des in Fig.3 gezeigten Zweirichtungsschalters;
- Fig.6: eine weitere Realisierung des in Fig.3 gezeigten Zweirichtungsschalters;
- Fig.7: eine zusätzliche Realisierung des in Fig.3 gezeigten Zweirichtungsschalters;
- Fig.8: eine beispielhafte Realisierung des in Fig. 3 gezeigten Zweirichtungsschalters mit zwei in beiden Stromrichtungen sperrfähigen Halbleitern und einer Überspannungsschutz-Schaltung für den ganzen Zweirichtungsschalter;
- Fig.9: eine beispielhafte Realisierung der Überspannungsschutz-Schaltung.

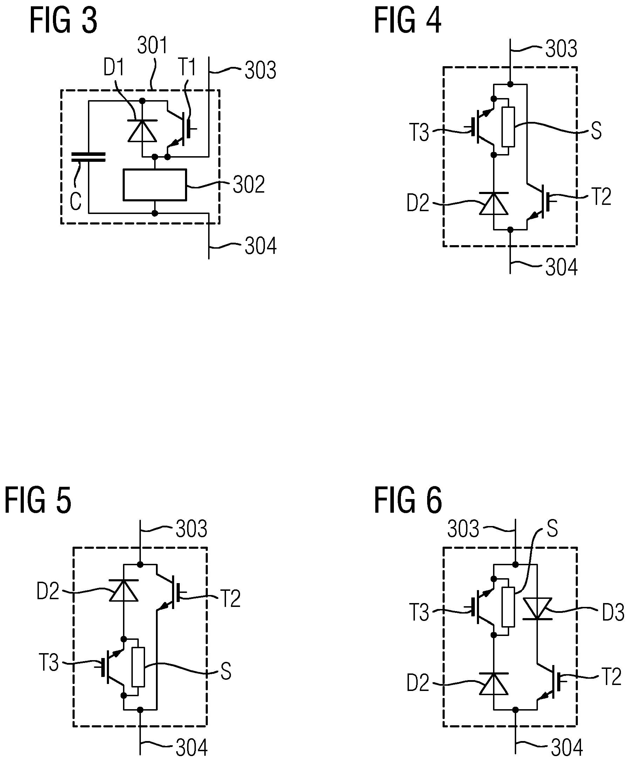

Fig.3 zeigt eine schematische Darstellung eines Konvertermoduls 301 gemäß dem vorliegenden Ansatz umfassend einen Kondensator C, eine Diode D1, einen elektronischen Schalter T1 (insbesondere ausgeführt als ein IGBT oder ein BipolarTransistor) sowie einen Zweirichtungsschalter 302. Das Konvertermodul 301 ist ein Zweipol mit Anschlüssen 303 und 304, wobei eine Vielzahl von Konvertermodulen 301 in einem MMC (vgl. z.B. die Anordnung gemäß Fig.1) vorgesehen sein kann.

Beispielhaft wird davon ausgegangen, dass der elektronische Schalter T1 als ein IGBT ausgeführt ist.

Der Emitter des IGBT T1 ist mit dem Anschluss 303 verbunden, die Diode D1 verbindet den Emitter mit dem Kollektor des IGBT T1, wobei die Kathode der Diode D1 in Richtung des Kollektors gerichtet ist. Der Zweirichtungsschalter 302 ist als Zweipol zwischen den Anschlüssen 303 und 304 angeordnet. Der Kondensator C ist einerseits mit dem Kollektor des IGBT T1 und andererseits mit dem Anschluss 304 verbunden.

Der IGBT T1 in Verbindung mit der Diode D1 entspricht einem IGBT-Dioden-Schalter, also einem Brückenschalter. Mittels des Zweirichtungsschalters 302 wird nun erreicht, dass das Konvertermodul fähig ist, den Strom in beiden Richtungen bzw. beide Polaritäten des Stroms zu sperren.

Hierzu wird der Zweirichtungsschalter 302 beispielsweise durch einen bidirektionalen Schalter gemäß der Anordnung in Fig.4 ersetzt. Ein IGBT T3 ist in Serie mit einer Diode D2 geschaltet, wobei der Emitter des IGBT T3 und die Kathode der Diode D2 in Richtung des Anschlusses 303 ausgerichtet sind. Der Emitter des IGBT T3 ist mit dem Anschluss 303 und die Anode der Diode D2 ist mit dem Anschluss 304 verbunden. Parallel zu der Reihenschaltung aus IGBT T3 und Diode D2 ist ein IGBT T2 angeordnet, wobei dessen Emitter mit dem Anschluss 304 verbunden ist.

Der IGBT T3 wird normalerweise in dem leitenden Zustand durch eine nicht in Fig.4 gezeigte Steuereinheit angesteuert. In diesem leitenden Zustand arbeitet der bidirektionale Schalter wie üblich, d.h. entsprechend der in Fig.1 gezeigten Anordnung. Soll der Konverter 301 z.B. wegen eines Fehlerfalls (z.B. des in Fig.2 gezeigten Kurschlusses) gesperrt werden, werden die IGBTs T1, T2 und T3 entsprechend mittels der Steuereinheit in den sperrenden Zustand versetzt. Somit wird durch den IGBT T3 wirksam verhindert, dass ein Strom durch die Diode D2 fließen kann. Die Diode D1 wird automatisch durch die an dem Kondensator C anliegende Spannung in den Sperrzustand geführt.

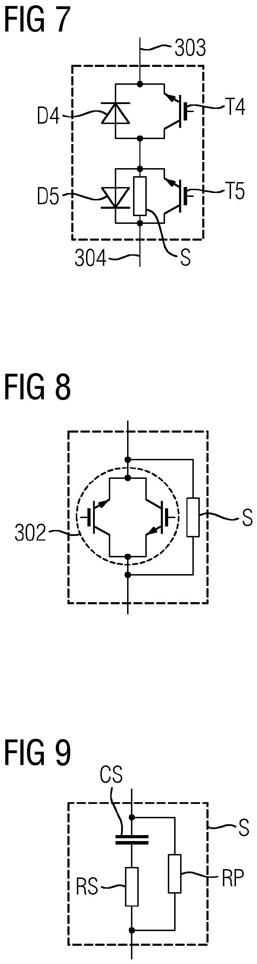

Optional kann parallel zu dem IGBT T3 (d.h. zwischen dem Emitter und dem Kollektor) ein sogenannter Snubber S (Überspannungsschutz, realisiert durch eine geeignete Schaltung bzw. Beschaltung) angeordnet sein. Anhand des Snubbers S kann das Potential zwischen den einzelnen Konvertermodulen 301 des MMC verteilt werden und es können Überspannungen auf dem Konvertermodul und insbesondere auf seinen Halbleitern begrenzt werden. Der Snubber S umfasst beispielsweise mindestens einen Widerstand, kann aber auch eine Kombination aus zwei Widerständen RS und RP und einem Kondensator CS aufgebaut sein, wie dies beispielhaft in Fig.9 dargestellt ist. Der Widerstand RS ist mit dem Kondensator CS in Reihe geschaltet und der Widerstand RP ist zu dieser Reihenschaltung parallel angeordnet.

Wie vorstehend ausgeführt, kann der Snubber S parallel zu dem IGBT T3 geschaltet sein. Alternativ ist es möglich, dass der Snubber S auch parallel zu dem Zweirichtungsschalter 302 geschaltet sein kann. Dies ist beispielhaft in Fig.8 angedeutet. Eine weitere Alternative ist es, dass der Snubber S parallel zu dem Konvertermodul 301 ausgeführt ist.

Fig.5 zeigt eine zu Fig.4 alternative Realisierung des Zweirichtungsschalters 302. Der IGBT T3 ist in Reihe mit der Diode D2 geschaltet, wobei die Kathode der Diode D2 mit dem Anschluss 303 und der Kollektor des IGBT T3 mit dem Anschluss 304 verbunden ist. Der IGBT T2 ist parallel zu der Reihenschaltung aus IGBT T3 und Diode D2 angeordnet, wobei der Emitter des IGBT T2 mit dem Anschluss 304 verbunden ist.

Optional kann der Snubber S parallel zu dem IGBT T3 angeordnet sein.

Fig.6 zeigt eine weitere Alternative für den Zweirichtungsschalter 302. Basierend auf der Realisierung gemäß Fig.4 wird eine zusätzliche Diode D3 mit dem IGBT T2 in Reihe geschaltet und diese Reihenschaltung parallel zu der Reihenschaltung aus dem IGBT T3 mit der Diode D2 angeordnet. Die Kathode der Diode D3 ist in Richtung des Kollektors des IGBT T2 angeordnet und die Anode der Diode D3 ist mit dem Anschluss 303 verbunden. Insofern ist im Vergleich zu Fig.4 die Diode D3 zwischen dem Kollektor des IGBT T2 und dem Anschluss 303 angeordnet.

Optional kann der Snubber S parallel zu dem IGBT T3 angeordnet sein.

Fig.7 zeigt noch eine Alternative für den Zweirichtungsschalter 302. Ein IGBT T4 ist mit parallel mit einer Diode D4 geschaltet, wobei die Kathode der Diode D4 mit dem Kollektor des IGBT T4 und die Anode der Diode D4 mit dem Emitter des IGBT T4 verbunden ist. Weiterhin ist ein IGBT T5 parallel zu einer Diode D5 angeordnet, wobei die Kathode der Diode D5 mit dem Kollektor des IGBT T5 und die Anode der Diode D5 mit dem Emitter des IGBT T5 verbunden ist. Die Parallelschaltung aus Diode D4 und IGBT T4 und die Parallelschaltung aus Diode D5 und IGBT T5 sind miteinander in Serie geschaltet, wobei die Kathode der Diode D4 und der Kollektor des IGBT T4 mit dem Anschluss 303 sowie die Kathode der Diode D5 und der Kollektor des IGBT T5 mit dem Anschluss 304 verbunden sind.

Optional kann der Snubber S parallel zu dem IGBT T5 sowie der Diode D5 angeordnet sein. Vorzugsweise wird dann der IGBT T5 gesteuert wie dies oben für den IGBT T3 beschrieben wurde.

Die Alternativen gemäß Fig.6 und Fig.7 weisen die Diode D3 bzw. D5 als zusätzliche Komponente auf. Dies kann jedoch von Vorteil sein, wenn kommerziell verfügbare Bauteile verwendet werden, die bereits eine entsprechende gegenläufige bzw. antiparallele Diode aufweisen.

### Weitere Vorteile:

Der hier vorgeschlagene Ansatz erlaubt eine effiziente Optimierung von Konvertermodulen, wobei beispielhaft nur ein einzelner elektronischer Schalter (d.h. ein Brückenschalter) in dem Konvertermodul durch einen Zweirichtungsschalter ersetzt wird. Hierdurch wird die Verlustleistung deutlich reduziert gegenüber dem Fall, wenn beide Brückenschalter durch Zweirichtungsschalter ersetzt würden. Insoweit führt die unsymmetrische Realisierung zu deutlichen Performance-Steigerungen.

Obwohl die Erfindung im Detail durch das mindestens eine gezeigte Ausführungsbeispiel näher illustriert und beschrieben wurde, so ist die Erfindung nicht darauf eingeschränkt, sondern wird einzig durch die Ansprüche definiert.

### Bezugszeichenliste

- 101: Wechselstromnetz
- 102: Transformator
- 103: MMC (Multilevel-Konverter)
- 104: Konvertermodul
- 105: Anschluss Gleichspannungsnetz
- 106: Anschluss Gleichspannungsnetz
- 107: Richtung
- 108: Kurzschluss
- 301: Konvertermodul
- 302: Zweirichtungsschalter
- 303: Anschluss
- 304: Anschluss
- C: Kondensator
- CS: Kondensator (Snubber-Kondensator)
- RS: Widerstand
- RP: Widerstand
- S: Snubber (Überspannungsschutz)
- T1: IGBT (elektronischer Schalter)
- T2: IGBT (elektronischer Schalter)
- T3: IGBT (elektronischer Schalter)
- T4: IGBT (elektronischer Schalter)
- T5: IGBT (elektronischer Schalter)
- D1: Diode
- D2: Diode
- D3: Diode
- D4: Diode
- D5: Diode

## Patentansprüche

1. Halbbrücken-Konvertermodul (301) für einen Multilevel-Konverter zur Hochspannungsgleichstromübertragung
- mit einer ersten Schalteinheit (T1, D1) und mit einer zweiten Schalteinheit (302), wobei die erste Schalteinheit (T1, D1) und die zweite Schalteinheit (302) in Reihe geschaltet sind,
- mit einem Kondensator (C), der parallel zu der in Reihe geschalteten ersten Schalteinheit (T1, D1) und zweiten Schalteinheit (302) angeordnet ist,
- wobei die zweite Schalteinheit (302) als ein Zweirichtungsschalter ausgeführt ist.

2. Halbbrücken-Konvertermodul nach Anspruch 1,
- aufweisend einen ersten und einen zweiten Anschluss (303, 304) zur Verbindung in dem Multilevel-Konverter,
- wobei der erste Anschluss (303) mit einem Mittenabgriff zwischen der ersten Schalteinheit (T1, D1) und dem Zweirichtungsschalter (302) verbunden ist und
- wobei der zweite Anschluss (304) mit dem anderen Pol des Zweirichtungsschalters (302) verbunden ist.

3. Halbbrücken-Konvertermodul nach einem der vorhergehenden Ansprüche, bei dem die erste Schalteinheit (T1, D1) einen Transistor oder einen IGBT aufweist mit einer antiparallel angeordneten Diode.

4. Halbbrücken-Konvertermodul nach einem der vorhergehenden Ansprüche, bei dem der Zweirichtungsschalter
- einen ersten elektronischen Schalter (T3) aufweist, der in Reihe mit einer ersten Diode (D2) geschaltet ist,
- wobei parallel zu dieser Reihenschaltung aus erstem elektronischen Schalter (T3) und erster Diode (D2) ein zweiter elektronischer Schalter (T2) angeordnet ist,
- wobei der erste elektronische Schalter (T3) und der zweite elektronische Schalter (T2) je eine Diodenstrecke aufweisen, wobei die Diodenstrecken der elektronischen Schalter zueinander entgegengesetzt angeordnet sind,
- wobei die erste Diode (D2) entsprechend der Diodenstrecke des ersten elektronischen Schalters (T3) angeordnet ist.

5. Halbbrücken-Konvertermodul nach einem der Ansprüche 1 bis 3, bei dem der Zweirichtungsschalter
- einen ersten elektronischen Schalter (T3) aufweist, der in Reihe mit einer ersten Diode (D2) geschaltet ist,
- wobei parallel zu dieser Reihenschaltung aus erstem elektronischen Schalter (T3) und erster Diode (D2) eine Reihenschaltung aus einem zweiten elektronischen Schalter (T2) und einer zweiten Diode (D3) angeordnet ist,
- wobei der erste elektronische Schalter (T3) und der zweite elektronische Schalter (T2) je eine Diodenstrecke aufweisen, wobei die Diodenstrecken der elektronischen Schalter zueinander entgegengesetzt angeordnet sind,
- wobei die erste Diode (D2) entsprechend der Diodenstrecke des ersten elektronischen Schalters (T3) angeordnet ist, und
- wobei die zweite Diode (D3) entsprechend der Diodenstrecke des zweiten elektronischen Schalters (T2) angeordnet ist.

6. Halbbrücken-Konvertermodul nach einem der Ansprüche 1 bis 3, bei dem der Zweirichtungsschalter
- einen ersten elektronischen Schalter (T5) mit einer antiparallel angeordneten ersten Diode (D5) aufweist,
- einen zweiten elektronischen Schalter (T4) mit einer antiparallel angeordneten zweiten Diode (D4) aufweist,
- wobei der erste elektronische Schalter (T5) und der zweite elektronische Schalter (T4) je eine Diodenstrecke aufweisen, wobei die Diodenstrecken der elektronischen Schalter zueinander entgegengesetzt angeordnet sind,
- wobei die Parallelschaltung aus erstem elektronischem Schalter (T5) und erster Diode (D5) mit der Parallelschaltung aus zweitem elektronischem Schalter (T4) und zweiter Diode (D4) in Reihe geschaltet sind.

7. Halbbrücken-Konvertermodul nach einem der Ansprüche 4 bis 6, bei dem parallel zu dem ersten elektronischen Schalter (T3, T5) ein Überspannungsschutz (S) angeordnet ist.

8. Halbbrücken-Konvertermodul nach einem der Ansprüche 4 bis 6, bei dem parallel zu dem zweiten elektronischen Schalter (T2, T4) ein Überspannungsschutz (S) angeordnet ist.

9. Halbbrücken-Konvertermodul nach einem der Ansprüche 4 bis 6, bei dem parallel zu dem Zweirichtungsschalter (302) ein Überspannungsschutz (S) angeordnet ist.

10. Halbbrücken-Konvertermodul nach einem der Ansprüche 4 bis 6, bei dem parallel zu dem Konvertermodul (301) ein Überspannungsschutz (S) angeordnet ist.

11. Halbbrücken-Konvertermodul nach einem der Ansprüche 7 bis 10, bei dem der Überspannungsschutz (S) mindestens einen Widerstand aufweist.

12. Halbbrücken-Konvertermodul nach Anspruch 11,
- bei dem der Überspannungsschutz (S) einen ersten Widerstand (RS), einen zweiten Widerstand (RP) und einen Snubber-Kondensator (CS) aufweist,
- wobei der erste Widerstand (RS) mit dem Snubber-Kondensator (CS) in Reihe geschaltet ist und
- wobei der zweite Widerstand (SP) zu der Reihenschaltung aus dem erstem Widerstand (RS) und dem Snubber-Kondensator (CS) parallel geschaltet ist.

13. Verfahren zur Ansteuerung des Halbbrücken-Konvertermoduls nach einem der vorhergehenden Ansprüche, bei dem in einem Fehlerfall die erste Schalteinheit (T1, D1) und die zweite Schalteinheit (302) sperrend angesteuert werden.

14. Multilevel-Konverter zur Hochspannungsgleichstromübertragung mit einer Vielzahl von Halbbrücken-Konvertermodulen (301) nach einem der Ansprüche 1 bis 12,
- wobei mehrere Stränge von Konvertermodulen parallel geschaltet sind,
- wobei ein Strang mehrere in Reihe geschaltete Konvertermodule aufweist.

## Claims

1. Half-bridge converter module (301) for a multilevel converter for HVDC transmission
- having a first switching unit (T1, D1) and having a second switching unit (302), wherein the first switching unit (T1, D1) and the second switching unit (302) are connected in series,
- having a capacitor (C), which is arranged in parallel with the first switching unit (T1, D1) and second switching unit (302) arranged in series,
- wherein the second switching unit (302) is embodied as a bidirectional switch.

2. Half-bridge converter module according to Claim 1,
- having a first and a second connection (303, 304) for connection in the multilevel converter,
- wherein the first connection (303) is connected to a centre tap between the first switching unit (T1, D1) and the bidirectional switch (302) and
- wherein the second connection (304) is connected to the other pole of the bidirectional switch (302).

3. Half-bridge converter module according to either of the preceding claims, in which the first switching unit (T1, D1) has a transistor or an IGBT having a diode arranged in antiparallel.

4. Half-bridge converter module according to one of the preceding claims, in which the bidirectional switch
- has a first electronic switch (T3), which is connected in series with a first diode (D2),
- wherein a second electronic switch (T2) is arranged in parallel with said series circuit composed of the first electronic switch (T3) and the first diode (D2),
- wherein the first electronic switch (T3) and the second electronic switch (T2) each have a diode path, wherein the diode paths of the electronic switches are arranged in the opposite direction to one another,
- wherein the first diode (D2) is arranged according to the diode path of the first electronic switch (T3).

5. Half-bridge converter module according to one of Claims 1 to 3, in which the bidirectional switch
- has a first electronic switch (T3), which is connected in series with a first diode (D2),
- wherein a series circuit composed of a second electronic switch (T2) and a second diode (D3) is arranged in parallel with said series circuit composed of the first electronic switch (T3) and the first diode (D2),
- wherein the first electronic switch (T3) and the second electronic switch (T2) each have a diode path, wherein the diode paths of the electronic switches are arranged in the opposite direction to one another,
- wherein the first diode (D2) is arranged according to the diode path of the first electronic switch (T3), and
- wherein the second diode (D3) is arranged according to the diode path of the second electronic switch (T2).

6. Half-bridge converter module according to one of Claims 1 to 3, in which the bidirectional switch
- has a first electronic switch (T5) having a first diode (D5) arranged in antiparallel,
- has a second electronic switch (T4) having a second diode (D4) arranged in antiparallel,
- wherein the first electronic switch (T5) and the second electronic switch (T4) each have a diode path, wherein the diode paths of the electronic switches are arranged in the opposite direction to one another,
- wherein the parallel circuit composed of the first electronic switch (T5) and the first diode (D5) is connected in series with the parallel circuit composed of the second electronic switch (T4) and the second diode (D4).

7. Half-bridge converter module according to one of Claims 4 to 6, in which an overvoltage protection system (S) is arranged in parallel with the first electronic switch (T3, T5).

8. Half-bridge converter module according to one of Claims 4 to 6, in which an overvoltage protection system (S) is arranged in parallel with the second electronic switch (T2, T4).

9. Half-bridge converter module according to one of Claims 4 to 6, in which an overvoltage protection system (S) is arranged in parallel with the bidirectional switch (302).

10. Half-bridge converter module according to one of Claims 4 to 6, in which an overvoltage protection system (S) is arranged in parallel with the converter module (301).

11. Half-bridge converter module according to one of Claims 7 to 10, in which the overvoltage protection system (S) has at least one resistor.

12. Half-bridge converter module according to Claim 11,
- in which the overvoltage protection system (S) has a first resistor (RS), a second resistor (RP) and a snubber capacitor (CS),
- wherein the first resistor (RS) is connected in series with the snubber capacitor (CS) and
- wherein the second resistor (RP) is connected in parallel with the series circuit composed of the first resistor (RS) and the snubber capacitor (CS).

13. Method for actuating the half-bridge converter module according to one of the preceding claims, in which, in the event of a fault, the first switching unit (T1, D1) and the second switching unit (302) are turned off.

14. Multilevel converter for HVDC transmission having a multiplicity of half-bridge converter modules (301) according to one of Claims 1 to 12,
- wherein a plurality of strings of converter modules are connected in parallel,
- wherein a string has a plurality of converter modules connected in series.

## Revendications

1. Module (301) de convertisseur à demi-pont pour un convertisseur à niveaux multiples de transport de courant continu à haute tension
- comprenant une première unité (T1, D1) de coupure et une deuxième unité (302) de coupure, la première unité (T1, D1) de coupure et la deuxième unité (302) de coupure étant montées en série,
- comprenant un condensateur (C), qui est monté en parallèle à la première unité (T1, D1) de coupure et à la deuxième unité (302) de coupure montées en série,
- dans lequel la deuxième unité (302) de coupure et réalisée en un interrupteur bidirectionnel.

2. Module de convertisseur à demi-pont suivant la revendication 1,
- comportant une première et une deuxième bornes (303, 304) de connexion dans le convertisseur à niveaux multiples,
- dans lequel la première borne (303) est connectée à une prise médiane entre la première unité (T1, D1) de coupure et l'interrupteur (302) bidirectionnel et
- dans lequel la deuxième borne (304) est connectée à l'autre pôle de l'interrupteur (302) bidirectionnel.

3. Module de convertisseur à demi-pont suivant l'une des revendications précédentes, dans lequel la première unité (T1, D1) de coupure a un transistor ou un IGBT avec une diode montée tête-bêche.

4. Module de convertisseur à demi-pont suivant l'une des revendications précédentes, dans lequel l'interrupteur bidirectionnel
- a un premier interrupteur (T3) électronique monté en série avec une première diode (D2),
- dans lequel un deuxième interrupteur (T2) électronique est monté en parallèle à ce circuit série composé du premier interrupteur (T3) électronique et de la première diode (D2),
- dans lequel le premier interrupteur (T3) électronique et le deuxième interrupteur (T2) électronique ont chacun une section de diode, les sections de diode des interrupteurs électroniques étant montées de manière opposées l'une à l'autre,
- dans lequel la première diode (D2) est montée de manière correspondante à la section de diode du premier interrupteur (T3) électronique.

5. Module de convertisseur à demi-pont suivant l'une des revendications 1 à 3, dans lequel l'interrupteur bidirectionnel
- a un premier interrupteur (T3) électronique monté en série avec une première diode (D2),
- dans lequel un circuit série, composé d'un deuxième interrupteur (T2) électronique et d'une deuxième diode (D3), est monté en parallèle au circuit série composé du premier interrupteur (T3) électronique et de la première diode (D2),
- dans lequel le premier interrupteur (T3) électronique et le deuxième interrupteur (T2) électronique ont chacun une section de diode, les sections de diode des interrupteurs électroniques étant montées de manière opposée l'une à l'autre,
- dans lequel la première diode (D2) est montée de manière correspondante à la section de diode du premier interrupteur (T3) électronique et
- dans lequel la deuxième diode (D3) est montée de manière correspondante à la section de diode du deuxième interrupteur (T2) électronique.

6. Module de convertisseur à demi-pont suivant l'une des revendications 1 à 3, dans lequel l'interrupteur bidirectionnel
- a un premier interrupteur (T5) électronique avec une première diode (D5) montée tête-bêche,
- a un deuxième interrupteur (T4) électronique avec une deuxième diode (D4) montée tête bêche,
- dans lequel le premier interrupteur (T5) électronique et le deuxième interrupteur (T4) électronique ont chacun une section de diode, les sections de diode des interrupteurs électroniques étant montées de manière opposées l'une à l'autre,
- dans lequel le montage en parallèle, composé du premier interrupteur (T5) électronique et de la première diode (D5), est monté en série avec le montage en parallèle, composé du deuxième interrupteur (T4) électronique et de la deuxième diode (D4).

7. Module de convertisseur à demi-pont suivant l'une des revendications 4 à 6, dans lequel une protection (S) vis-à-vis de la surtension est montée en parallèle au premier interrupteur (T3, T5) électronique.

8. Module de convertisseur à demi-pont suivant l'une des revendications 4 à 6, dans lequel une protection (S) vis-à-vis de la surtension est montée en parallèle au deuxième interrupteur (T2, T4) électronique.

9. Module de convertisseur à demi-pont suivant l'une des revendications 4 à 6, dans lequel une protection (S) vis-à-vis de la surtension est montée en parallèle à l'interrupteur (302) bidirectionnel.

10. Module de convertisseur à demi-pont suivant l'une des revendications 4 à 6, dans lequel une protection (S) vis-à-vis de la surtension est montée en parallèle au module (301) de convertisseur.

11. Module de convertisseur à demi-pont suivant l'une des revendications 7 à 10, dans lequel la protection (S) vis-à-vis de la surtension a au moins une résistance.

12. Module de convertisseur à demi-pont suivant la revendication 11,
- dans lequel la protection (S) vis-à-vis de la surtension a une première résistance (RS), une deuxième résistance (RP) et un condensateur (CS) d'amortissement,
- dans lequel la première résistance (RS) est montée en série avec le condensateur (CS) d'amortissement et
- dans lequel la deuxième résistance (SP) est montée en parallèle au montage en série, composé de la première résistance (RS) et du condensateur (CS) d'amortissement.

13. Procédé de commande du module de convertisseur à demi-pont suivant l'une des revendications précédentes, dans lequel, en cas de défaut, on commande en blocage la première unité (T1, D1) de coupure et la deuxième unité (302) de coupure.

14. Convertisseur à niveaux multiples pour le transport de courant continu à haute tension, ayant une pluralité de modules (301) de convertisseur à demi-pont suivant l'une des revendications 1 à 12,
- dans lequel plusieurs lignes de module de convertisseur sont montées en parallèle,
- dans lequel une ligne a plusieurs modules de convertisseur montés en série.
